(19)

**Europäisches Patentamt**

**European Patent Office**

**Office européen des brevets**

(11) **EP 4 620 781 A1**

(12) **EUROPEAN PATENT APPLICATION**

(43) Date of publication:
24.09.2025 Bulletin 2025/39

(21) Application number: 24164230.5

(22) Date of filing: **18.03.2024**

(51) International Patent Classification (IPC):
**B62D 13/00** (2006.01) **B62D 13/06** (2006.01)

(52) Cooperative Patent Classification (CPC):
**B62D 13/00;** B62D 13/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **Möller, Daniel**
**445 56 Ale (SE)**
• **Hansson, Johan**
**436 38 Askim (SE)**
• **Sadeghi Kati, Maliheh**
**433 51 Öjersjö (SE)**

(74) Representative: **Valea AB**
**Box 1098**
**405 23 Göteborg (SE)**

(54) **ESTIMATING ARTICULATION ANGLE OF A COMBINATION VEHICLE**

(57) A computer system (700) comprising processing circuitry (702) configured to estimate an articulation angle for a combination vehicle (100) is provided. A second vehicle unit (2) is connected to a first vehicle unit (1) at a first coupling point (cpi) forming a first articulation angle. The processing circuitry (702) is configured to estimate the first articulation angle $(\psi_1)$ based on a first indication, a longitudinal speed $(vx_1)$ along a first longitudinal axis (axi) of the first vehicle unit (1), a wheelbase length $(l_{wb2})$ of the second vehicle unit (2), and a coupling length (lc1) between a rear axle group (ragi) of the first vehicle unit (1) and the first coupling point (cp1). The first indication is indicative of a first yaw rate $(\omega_{z1})$ of a first vehicle unit (1) and/or of a towing articulation angle $(\psi_0)$ between the first vehicle unit (1) and a towing vehicle unit (0).

Fig. 1

## Description

### TECHNICAL FIELD

The disclosure relates generally to articulation angles of a combination vehicle. In particular aspects, the disclosure relates to estimating one or more articulation angles of a combination vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The angle between units in a combination vehicle is referred to as an articulation angle. This angle, in particular between a leading towing unit such as a tractor and a towed unit such as a trailer or a dolly is an important variable when estimating other various aspects of the combination vehicle, such as a motion and/or stability of the combination vehicle.

The articulation angle can be estimated or measured in different ways which all comes with drawbacks. For example, the articulation angle can be estimated based on a steering wheel angle, however, for such approaches the estimation will be inaccurate immediately after a driver changes steering direction or during instability such as during jack-knifing events.

Hence there is a need to improve articulation angle estimation for articulated combination vehicles.

### SUMMARY

According to a first aspect of the disclosure, a computer system comprising processing circuitry configured to estimate one or more articulation angles for a combination vehicle comprising a plurality of vehicle units is provided. The plurality of vehicle units comprises a first vehicle unit and a second vehicle unit. The first vehicle unit extends in a first longitudinal direction along a first longitudinal axis. The second vehicle unit extends in a second longitudinal direction along a second longitudinal axis. The first vehicle unit is located in front of said second vehicle unit as seen along the first longitudinal axis. The second vehicle unit is pivotally connected to the first vehicle unit at a first coupling point such that the first longitudinal axis and the second longitudinal axis form a first articulation angle. In examples herein, the first vehicle unit may be a leading towing unit such as a tractor, or may be a towed vehicle unit such as a trailer.

The processing circuitry is configured to obtain a first indication. The first indication is indicative of a first yaw rate of the first vehicle unit and/or indicative of a towing articulation angle between the first vehicle unit and a towing coupling point of a towing vehicle unit arranged to tow the first vehicle unit. In examples where the first indication is indicative of the towing articulation angle, the towing vehicle unit is located in front of the first vehicle unit as seen along the first longitudinal axis.

The processing circuitry is configured to obtain a second indication of a first longitudinal speed along the first longitudinal axis of the first vehicle unit.

The processing circuitry is configured to obtain a third indication of a second wheelbase length of the second vehicle unit. The second wheelbase length is a distance along the second longitudinal axis. The second wheelbase length is a distance from the first coupling point to a center position of a second rear axle group of the second vehicle unit.

The processing circuitry is configured to obtain a fourth indication of a first coupling length along the first longitudinal axis. The first coupling length is a length between a center position of a first rear axle group of the first vehicle unit and the first coupling point.

The processing circuitry is configured to estimate the first articulation angle based on the first indication, the first longitudinal speed, the second wheelbase length and the first coupling length. The estimation may be according to any suitable predefined model, such as a trigonometric model and/or based on a statistical model such as a trained machine learning model.

The first aspect of the disclosure may seek to improve articulation angle estimation for the combination vehicle.

A technical benefit may include improved accuracy and efficiency of estimating the articulation angle of the combination vehicle. This is since the articulation angle is estimated based on the first, second, third, and fourth indications which are simple to obtain from the combination vehicle, which indications are typically already available in vehicle systems, and the estimation does not rely on any error-prone sensor such as a camera. The estimation relies on indications which are possible to accurately measure or otherwise obtain, and the estimation can therefore be of high accuracy, such as based on a machine learning model or based on a predefined trigonometric model. The estimation may further be used in combination with any other suitable articulation angle estimation to improve accuracy and reliability of articulation angle estimation.

Optionally in some examples, including in at least one preferred example, the processing circuitry is configured to estimate the first articulation angle using a procedure comprising determining a first turning motion characteristic of the first rear axle group of the first vehicle and a second turning motion characteristic of the second rear axle group.

A technical benefit may include improved accuracy and efficiency of estimating the first articulation angle. This is since the first articulation angle can be determined accurately only based on the first and second turning motion characteristics, which are easy to obtain by common vehicle systems or sensors and does not require any additional expensive sensor equipment. The first articulation angle will further be mathematically accurate, assuming the respective motion characteristics are maintained for a period of time.

The respective turning motion characteristics indicate how the first and second vehicle units will move in relation to each other, and hence, the first articulation angle can be estimated accordingly.

Optionally in some examples, including in at least one preferred example, the procedure comprises determining a second turning radius of the second rear axle group and to use the second turning radius and the second wheelbase length to determine a second reference angle representative of a second turning motion characteristic of the second rear axle group.

A technical benefit may include improved accuracy and efficiency of estimating the first articulation angle. This is since the second turning radius can be easily obtained or estimated by common vehicle systems or sensors, and does not require any additional expensive sensor equipment. The second turning radius may further indicate how the second vehicle unit will move in relation to the first vehicle unit, and hence, the first articulation angle can be estimated accordingly.

Optionally in some examples, including in at least one preferred example, the procedure comprises determining a first turning radius of the first rear axle group and to combine the first turning radius and the first coupling length to determine a first reference angle representative of the first turning motion characteristic of the first rear axle group.

A technical benefit may include improved accuracy and efficiency of estimating the first articulation angle. This is since the first turning radius can be easily obtained or estimated by common vehicle systems or sensors, and does not require any additional expensive sensor equipment. The first turning radius may further indicate how the first vehicle unit will move in relation to the second vehicle unit, and hence, the first articulation angle can be estimated accordingly.

Optionally in some examples, including in at least one preferred example, the processing circuitry is configured to estimate the first articulation angle based on that a first turning radius of the first rear axle group, a second turning radius of the second rear axle group, and a third turning radius of the first coupling point share a center point.

A technical benefit may include improved accuracy and efficiency of estimating the first articulation angle. This is since when the first and second vehicle unit turns around the same shared center point, the first articulation angle can be accurately estimated.

Optionally in some examples, including in at least one preferred example, the estimated first articulation angle is an estimation of a current articulation angle.

A technical benefit may include improved accuracy and efficiency of estimating the first articulation angle. This is since the current articulation angle can be immediately estimated. This may be different from other estimation approaches which may need to follow changes in sensor data over time.

Optionally in some examples, including in at least one preferred example, the estimated first articulation angle is an estimation of a future articulation angle wherein the first articulation angle is expected to occur at a steady state if the first yaw rate and the first longitudinal speed remains constant.

A technical benefit may include improved accuracy and efficiency of estimating the first articulation angle. This is since due to trigonometric relationships, if the first yaw rate and the first longitudinal speed remains constant, the first and second vehicle unit will independent of a current articulation angle, converge towards the first articulation angle defined by the constant first yaw rate and the first longitudinal speed.

Optionally in some examples, including in at least one preferred example, the steady-state is expected to occur within an expected transition time window.

A technical benefit may include improved accuracy and efficiency of estimating the first articulation angle. This is since it may be possible to accurately have information of what time period the first articulation angle is expected.

Optionally in some examples, including in at least one preferred example, the expected transition time window is a predefined time period or a time period calculated based on a predefined time model and by considering:

- the first yaw rate,
- the first longitudinal speed,
- the second wheelbase length and
- the first coupling length.

A technical benefit may include improved accuracy and efficiency of estimating the first articulation angle. This is since it may be possible to accurately have information of what time period the first articulation angle is expected.

Optionally in some examples, including in at least one preferred example, wherein when the first vehicle unit is a towed vehicle unit, the processing circuitry is further configured to obtain the first indication by obtaining the towing articulation angle or by estimating the first yaw rate.

A technical benefit may include improved accuracy and efficiency of estimating the first articulation angle. This is since towed articulation units such as trailers may typically not be equipped with sensors that can measure the first yaw rate, hence, the first yaw rate needs to be estimated or the towing articulation angle can be used as a replacement parameter.

Optionally in some examples, including in at least one preferred example, estimating the first yaw rate comprises:

- obtaining an indication of wheel speeds of wheels of the first vehicle unit,
- obtaining an indication of a track width of the first vehicle unit, and
- estimating the first yaw rate based on the wheel speeds and the track width of the first vehicle unit; and/or estimating the first yaw rate comprises:

  - - obtaining an indication of a lateral acceleration of the first vehicle unit, and
  - - obtaining an indication of longitudinal speed of the first vehicle unit, and
  - - estimating the first yaw rate based on the lateral acceleration and the longitudinal speed of the first vehicle unit.

A technical benefit may include improved accuracy and efficiency of estimating the first articulation angle. This is since the first yaw rate can be efficiently and accurately estimated. Accordingly, the first articulation angle can be estimated accurately and efficiently.

Optionally in some examples, including in at least one preferred example, when the first vehicle unit is a towing vehicle unit such as a tractor, the processing circuitry is further configured to obtain the first indication by measuring the first yaw rate using one or more sensors of the first vehicle unit.

A technical benefit may include improved accuracy and efficiency of estimating the first articulation angle. This is since towing vehicle units such as tractors typically are attached with one or more sensors or other equipment configured to measure the first yaw rate, hence, the first yaw rate can be accurately obtained as received from the one or more sensors or other equipment of the vehicle. Accordingly, the first articulation angle can be estimated accurately and efficiently.

Optionally in some examples, including in at least one preferred example, the plurality of vehicle units comprises a third vehicle unit. The third vehicle unit extends in a third longitudinal direction along a third longitudinal axis. The second vehicle unit is located in front of said third vehicle unit as seen along the second longitudinal axis. The third vehicle unit is pivotally connected to the second vehicle unit at a second coupling point such that the second longitudinal axis and the third longitudinal axis form a second articulation angle. In some of these examples the processing circuitry is further configured to:

- obtain a fifth indication, the fifth indication being indicative of a second yaw rate of the second vehicle unit and/or indicative of the first articulation angle,
- obtain a sixth indication of a second longitudinal speed along the second longitudinal axis of the second vehicle unit,
- obtain a seventh indication of a third wheelbase length of the third unit, the third wheelbase length being a distance along the third longitudinal axis from the second coupling point to a center position of a third rear axle group of the third vehicle unit,
- obtain an eight indication of a second coupling length along the second longitudinal axis between the center position of the second rear axle group and the second coupling point, and
- estimate the second articulation angle based on the fifth indication, the second longitudinal speed, the third wheelbase length and the second coupling length.

A technical benefit may include improved accuracy and efficiency of estimating the articulation angles for the combination vehicle. This is since the second articulation angle can be estimated in addition to the first articulation angle.

According to a second aspect of the disclosure, a combination vehicle comprising a plurality of vehicle units is provided. The plurality of vehicle units comprises a first vehicle unit and a second vehicle unit. The first vehicle unit extends in a first longitudinal direction along a first longitudinal axis. The second vehicle unit extends in a second longitudinal direction along a second longitudinal axis. The first vehicle unit is located in front of said second vehicle unit as seen along the first longitudinal axis. The second vehicle unit is pivotally connected to the first vehicle unit at a first coupling point such that the first longitudinal axis and the second longitudinal axis form a first articulation angle. Preferably, the first vehicle unit is a tractor or other leading towed vehicle unit. Preferably, the second vehicle unit is a trailer. The combination vehicle comprises the computer system according to the first aspect and/or the combination vehicle is configured to be controlled based on one or more articulation angles as estimated by the computer system according to the first aspect.

A technical benefit may include more accurate operation of the combination vehicle as the articulation angles can be more efficiently, accurately, and reliably be estimated and used for controlling the combination vehicle. Further technical benefits correspond to the technical benefits of the first aspect.

According to a third aspect of the disclosure, a computer-implemented method for estimating one or more articulation angles for a combination vehicle comprising a plurality of vehicle units is provided. The plurality of vehicle units comprises a first vehicle unit and a second vehicle unit. The first vehicle unit extends in a first longitudinal direction along a first longitudinal axis. The second vehicle unit extends in a second longitudinal direction along a second longitudinal axis. The first vehicle unit is located in front of said second vehicle unit as seen along the first longitudinal axis. The second vehicle unit is pivotally connected to the first vehicle unit at a first coupling point such that the first longitudinal axis and the second longitudinal axis form a first articulation angle. The method comprises, by processing circuitry of a computer system, obtaining a first indication. The first indication is indicative of a first yaw rate of the first vehicle unit and/or indicative of a towing articulation angle between the first vehicle unit and a towing coupling point of a towing vehicle unit arranged to tow the first vehicle unit. In examples when the first indication is indicative of the towing articulation angle, the towing vehicle unit is located in front of the first vehicle unit as seen along the first longitudinal axis. The method comprises, by the processing circuitry obtaining a second indication of a first longitudinal speed along the first longitudinal axis of the first vehicle unit. The method comprises, by the processing circuitry obtaining a third indication of a second wheelbase length of the second vehicle unit of the plurality of vehicle units, the second wheelbase length being a distance along the second longitudinal axis from the first coupling point to a center of a second rear axle group of the second vehicle unit. The method comprises, by the processing circuitry obtaining a fourth indication of a first coupling length along the first longitudinal axis, between a center position of a first rear axle group of the first vehicle unit and the first coupling point. The method comprises, by the processing circuitry estimating the first articulation angle based on the first indication, the first longitudinal speed, the second wheelbase length and the first coupling length.

Technical benefits of the third aspect correspond to the technical benefits of the first aspect.

Optionally in some examples, including in at least one preferred example, estimating the first articulation angle is performed by using a procedure comprising determining a first turning motion characteristic of the first rear axle group of the first vehicle and a second turning motion characteristic of the second rear axle group.

Optionally in some examples, including in at least one preferred example, the procedure comprises determining a second turning radius of the second rear axle group and to use the second turning radius and the second wheelbase length to determine a second reference angle representative of a second turning motion characteristic of the second rear axle group.

Optionally in some examples, including in at least one preferred example, the procedure comprises determining a first turning radius of the first rear axle group and to combine the first turning radius and the first coupling length to determine a first reference angle representative of the first turning motion characteristic of the first rear axle group.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

BRIEF DESCRIPTION OF THE DRAWINGS

FIG. 1 is an exemplary combination vehicle according to an example.
FIG. 2 is an exemplary combination vehicle according to an example.
FIG. 3 is a flow chart of an exemplary method according to an example.
FIG. 4 is an exemplary combination vehicle according to an example.
FIG. 5 is a flow chart of an exemplary method to according to an example.
FIG. 6 is another view of FIG. 1, according to an example.
FIG. 7 is a schematic diagram of an exemplary computer system for implementing examples disclosed herein, according to an example.

DETAILED DESCRIPTION

The detailed description set forth below provides information and examples of the disclosed technology with sufficient detail to enable those skilled in the art to practice the disclosure.

Articulation angles need to be used for many different applications such as for controlling vehicle motion or performing stability functionalities.

Examples herein relate to how to estimate one or more articulations angles for combination vehicles.

In examples herein, articulation angles may be estimated from trigonometric relationships of the vehicle combination. As an alternative, they may be estimated based on predefined statistical models, such as machine learning models.

Examples herein may improve accuracy, efficiency and/or increase reliability of estimating articulation angles for combination vehicles. The articulation angles estimated for examples herein may be used as primary estimation or as redundant estimations for vehicle systems.

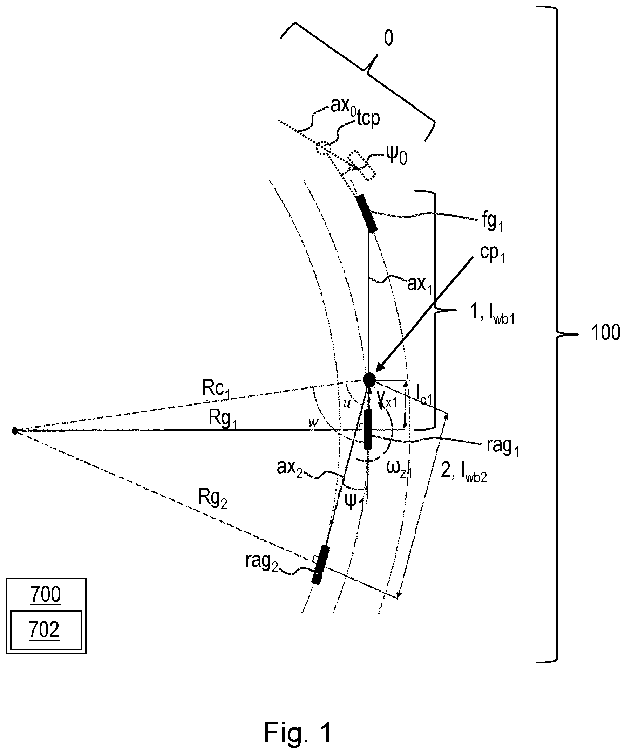

**FIG. 1** illustrates a **combination vehicle 100** according to some examples herein.

The combination vehicle 100 comprises a plurality of vehicle units including a **first vehicle unit 1 and a second vehicle unit 2.** The first vehicle unit 1 may preferably be a tractor or a towing vehicle unit arranged to tow the remaining plurality of vehicle units. The second vehicle unit 2 may be a trailer or dolly or otherwise towed vehicle unit.

The first vehicle unit 1 extends in a first longitudinal direction along a **first longitudinal axis $ax_1$**.

The first longitudinal axis $ax_1$ may be parallel to a direction of travel of the first vehicle unit 1, e.g., if the first vehicle unit 1 would not be subject to a turning motion, i.e., a momentary forward direction.

The second vehicle unit 2 extends in a second longitudinal direction along a **second longitudinal axis $ax_2$.**

The second longitudinal axis $ax_2$ may be parallel to a direction of travel of the second vehicle unit 2, e.g., if the second vehicle unit 2 would not be subject to a turning motion, i.e., a momentary forward direction.

The first vehicle unit 1 is located in front of said second vehicle unit 2 as seen along the first longitudinal axis $ax1$.

The second vehicle unit 2 is pivotally connected to the first vehicle unit 1 at a **first coupling point $cp1$** such that the first longitudinal axis $ax_1$ and the second longitudinal axis $ax_2$ form a **first articulation angle $\psi_1$.**

The first vehicle unit 1 and the second vehicle unit 2 may be turning such that they have respective turning motion characteristics.

The first vehicle unit 1 may be subject to a first yaw rate $\omega_{z1}$ and may be subject to a first longitudinal speed $v_{x1}$ along the first longitudinal axis $ax1$ of the first vehicle unit 1.

When the first vehicle unit 1 is a tractor or other towing vehicle unit, the first yaw rate $\omega_{z1}$ may typically be obtained based on measurements from sensors in the first vehicle unit 1, however, when the first vehicle unit 1 is a trailer or other towed vehicle units, the first yaw rate $\omega_{z1}$ may need to be estimated, e.g., using sensor data of wheel speed sensors or other suitable sensors.

When the first vehicle unit 1 is a trailer or other towed vehicle unit, the combination vehicle 100 may comprise a towing vehicle unit 0. In these examples, the towing vehicle unit 0 extends in a second longitudinal direction along a **towing longitudinal axis $ax_0$.** In these examples, the first vehicle unit 1 is pivotally connected to the towing vehicle unit 0 at a **towing coupling point tcp** such that the towing longitudinal axis $ax_0$ and the first longitudinal axis $ax_1$ form a **towing articulation angle $\psi_0$**.

The first vehicle unit 1 may be associated with a **first wheelbase length $l_{wb1}$**. The first wheelbase length $l_{wb1}$ may be a distance along the first longitudinal axis $ax_1$, e.g., from a center position of a **first rear axle group $rag_1$** of the first vehicle unit 1, and to the towing coupling point tcp, e.g., if the first vehicle unit 1 is a towed vehicle unit such as a trailer, or to a center position of a **front wheel group fgi** of the first vehicle unit 1, e.g., if the first vehicle unit is a towing vehicle unit such as a tractor.

The second vehicle unit 2 may be associated with a **second wheelbase length $l_{wb2}$**. The second wheelbase length $l_{wb2}$ may be a distance along the second longitudinal axis $ax_2$, from the first coupling point $cp_1$ to a center position of a **second rear axle group $rag_2$** of the second vehicle unit 2.

The first vehicle unit 1 is associated with a **first coupling length $l_{c1}$** along the first longitudinal axis $ax1$, between a center position of the first rear axle group $rag_1$ of the first vehicle unit 1 and the first coupling point $cp_1$.

Turning motions herein may define how parts of the combination vehicle 100 is moving. As an example, turning radiuses may be used for different parts of examples herein. For example, a **first turning radius $Rg_1$** may define a turning radius of the first rear axle group $rag_1$. A **second turning radius $Rg_2$** may define a turning radius of the second rear axle group $rag_2$. A **third turning radius $Rc_1$** may define a turning radius of the first coupling point $cp_1$. The first, second and third turning radius may share a center point, i.e., they are turning around the same position. This is since a slip angle for these examples is typically negligible, but can also be accounted for in examples herein. Examples herein may preferably obtain information of the first yaw rate $\omega_{z1}$, the first longitudinal speed $v_{x1}$, the second wheelbase length $l_{wb2}$ and the first coupling length $l_{c1}$, e.g., as predefined and/or received as sensor data from sensors of the vehicle or derived based on said sensor data. Furthermore, examples herein may preferably estimate the first articulation angle $\psi_1$, based on the first yaw rate $\omega_{z1}$, the first longitudinal speed $v_{x1}$, the second wheelbase length $l_{wb2}$ and the first coupling length $l_{c1}$. If the first yaw rate $\omega_{z1}$, is not available, and the first vehicle unit 1 is a towed vehicle unit, then the towing articulation angle $\psi_0$, may be used instead. The estimation may preferably be based on a trigonometric relationship, typically comprising the intermediate step of deriving the first, second and/or third turning radiuses $Rc_1$, $Rg_1$, $Rg_2$. As an alternative, the estimation may be based on a trained machine learning model, e.g., a neural network, trained based on a number of training combination vehicles with measured corresponding values of vehicle units of respective training combination vehicles, such as respective yaw rates of the vehicle units, respective longitudinal speed of the vehicle units, respective wheelbase length of the vehicle units, respective coupling lengths of the vehicle units, and respective articulation angle(s) of the vehicle units.

Examples herein may relate to determining a **first reference angle u** representative of a first turning motion characteristic of the first rear axle group $rag_1$. Examples herein may further relate to determining a **second reference angle w** representative of a second turning motion characteristic of the second rear axle group $rag_2$. The first reference angle u and the second reference angle w may describe how the first and second vehicle units 1, 2, turn relative each other such that the first articulation angle $\psi_1$ may be estimated.

Examples herein may be performed by a **computer system 700 and/or a processing circuitry 702** therein.

The computer system 700 and/or the processing circuitry 702 may be comprised in the combination vehicle 100 and/or may be remote to the combination vehicle 100, e.g., as part of a server or cloud service.

In other words, the combination vehicle 100 comprises the computer system 700 and/or the processing circuitry 702 and/or the combination vehicle 100 is configured to be controlled based on one or more articulation angles estimated by the computer system 700 and/or the processing circuitry 702.

The computer system 700 and/or the processing circuitry 702 may be communicatively coupled with any suitable sensors that may be used for obtaining any suitable information of any of the examples herein.

The computer system 700 and/or the processing circuitry 702 may be an Electronic Control Unit (ECU).

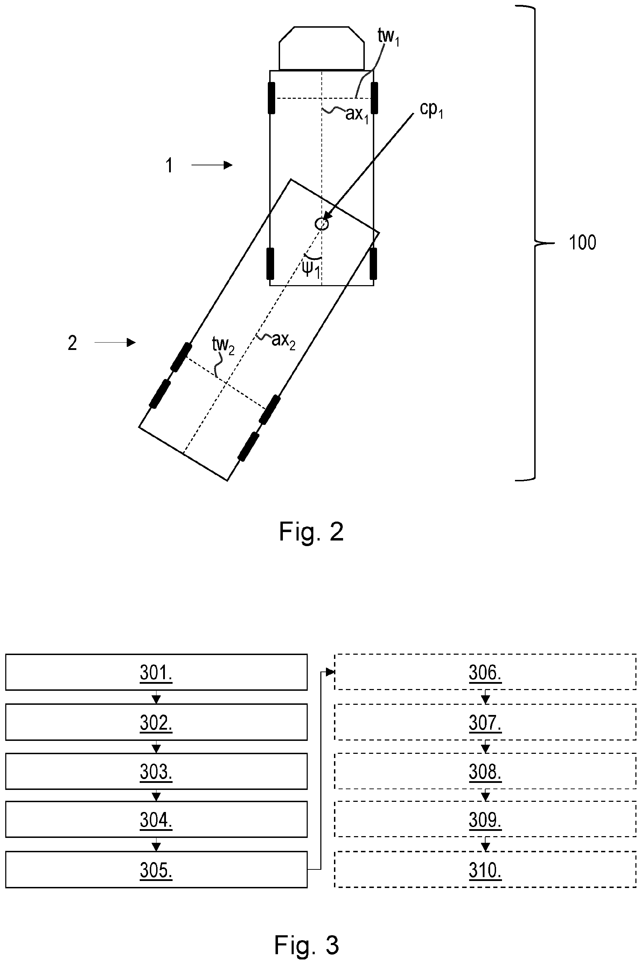

**FIG. 2** is another example of the combination vehicle 100. In this example, it is illustrated that the first vehicle unit 1 may be a tractor towing the second vehicle unit 2, wherein the second vehicle unit 2 is a trailer.

The first vehicle unit 1 is located in front of said second vehicle unit 2 as seen along the first longitudinal axis $ax_1$. The second vehicle unit 2 is pivotally connected to the first vehicle unit 1 at the first coupling point $cp_1$ such that the first longitudinal axis $ax_1$ and the second longitudinal axis $ax_2$ form the **first articulation angle $\psi_1$.**

In FIG. 2, it is clarified that the first vehicle unit 1 and the second vehicle unit 2, have respective widths, not illustrated in FIG. 1. In particular, the first vehicle unit 1 may be associated with a **first track width $tw_1$,** e.g., the distance between wheels of an axle of the first vehicle unit 1. The second vehicle unit 2 may be associated with a **second track width $tw_2$,** e.g., the distance between wheels of an axle of the second vehicle unit 2.

The first vehicle 1 unit and the second vehicle unit 2 may be turning such that they have respective turning motion characteristics.

**FIG. 3** is a flow chart of an exemplary computer-implemented method for estimating one or more articulation angles for the combination vehicle 100. The combination vehicle 100 comprises the plurality of vehicle units. The plurality of vehicle units comprises the first vehicle unit 1 and the second vehicle unit 2. The first vehicle unit 1 extends in the first longitudinal direction along the first longitudinal axis $ax_1$. The second vehicle unit 2 extends in the second longitudinal direction along the second longitudinal axis $ax_2$. The first vehicle unit 1 is located in front of said second vehicle unit 2 as seen along the first longitudinal axis $ax_1$. The second vehicle unit 2 is pivotally connected to the first vehicle unit 1 at a first coupling point cp1 such that the first longitudinal axis $ax_1$ and the second longitudinal axis $ax_2$ form the first articulation angle $\psi_1$.

The method may be performed by the computer system 700 and/or the processing circuitry 702 therein. In other words, the computer system 700 and/or the processing circuitry 702 may be configured to perform any one or more out of the following actions. The following actions may be taken in any suitable order. Dashed boxes in FIG. 3 may indicate optional actions.

**Action 301**

The method comprises obtaining a first indication. The first indication is indicative of the first yaw rate $\omega_{z1}$ of the first vehicle unit 1 and/or indicative of the towing articulation angle $\psi_0$ between the first vehicle unit 1 and the towing coupling point tcp of the towing vehicle unit 0 arranged to tow the first vehicle unit 1. When the first indication comprises the first yaw rate $\omega_{z1}$, the first yaw rate $\omega_{z1}$ may be obtained as received from sensors in the combination vehicle 100, which is typically the case when the first vehicle unit 1 is a towing vehicle unit such as a tractor. The first yaw rate $\omega_{z1}$ may also be estimated based on received sensor data from sensors, e.g., based on wheel speed data of wheel speed sensors and/or steering wheel angle for the first vehicle unit 1 and/or estimated based on the towing articulation angle $\psi_0$, e.g., when the first vehicle unit 1 is a towed vehicle unit such as a trailer.

In other words, when the first vehicle unit 1 is a towing vehicle unit 0 such as a tractor, the first indication may be obtained by measuring the first yaw rate $\omega_{z1}$ using one or more sensors of the first vehicle unit 1. In a corresponding manner, when the first vehicle unit 1 is a towed vehicle unit such as a trailer, the first indication may be obtained by obtaining the towing articulation angle or by estimating the first yaw rate $\omega_{x1}$.

Estimating the first yaw rate $\omega_{z1}$ may comprise:

- obtaining an indication of wheel speeds of wheels of the first vehicle unit 1, e.g., by receiving wheel speeds from wheel speeds sensors of the first vehicle unit,
- obtaining an indication of the first track width twi of the first vehicle unit 1, e.g., as a predefined value, and
- estimating the first yaw rate $\omega_{z1}$ based on the wheel speeds and the first track width twi of the first vehicle unit 1.

Additionally or alternatively, estimating the first yaw rate $\omega_{z1}$ comprises:

- obtaining an indication of a lateral acceleration of the first vehicle unit 1, e.g., based on receiving the lateral acceleration from a sensor of the first vehicle unit 1 and/or based on steering wheel angle and/or optionally other vehicle motion data such as vehicle longitudinal speed, and
- obtaining an indication of longitudinal speed of the first vehicle unit 1, e.g., as received in action 302, and
- estimating the first yaw rate based on the lateral acceleration and the longitudinal speed of the first vehicle unit 1.

While acceleration and speed is mentioned above, any other longitudinal and/or lateral motions may also be used as an alternative when estimating the yaw rate $\omega_{z1}$.

When the first indication indicates the towing articulation angle $\psi_0$, the towing articulation angle $\psi_0$ may be obtained as received from sensor data of sensors in the combination vehicle 100, as derived or estimated by any other suitable means, and/or estimated based on any suitable actions of examples herein, but estimated for the towing articulation angle $\psi_0$. In these examples, the towing vehicle unit 0 is located in front of the first vehicle unit 1 as seen along the first longitudinal axis $ax_1$.

**Action 302**

The method comprises obtaining a second indication of the first longitudinal speed $v_{x1}$ along the first longitudinal axis $ax_1$ of the first vehicle unit 1. Obtaining the second indication may comprise receiving the first longitudinal speed $v_{x1}$ from a speedometer of the first vehicle unit 1, or receiving the first longitudinal speed $v_{x1}$ from any other suitable speed sensor of the first vehicle unit 1.

**Action 303**

The method comprises obtaining a third indication of the second wheelbase length $l_{wb2}$ of the second vehicle unit 2 of the plurality of vehicle units. The second wheelbase length $l_{wb2}$ is the distance along the second longitudinal axis $ax_2$ from the first coupling point $cp_1$ to a center of a second rear axle group $rag_2$ of the second vehicle unit 2. Obtaining the third indication may comprise obtaining the second wheelbase length $l_{wb2}$ as a predefined value, e.g., as stored and retrieved within the computer system 700 or retrieved from a suitable storage medium.

**Action 304**

The method comprises obtaining a fourth indication of a first coupling length $l_{c1}$ along the first longitudinal axis $ax_1$ between a center position of the first rear axle group $rag_1$ of the first vehicle unit 1 and the first coupling point $cp_1$. Obtaining the fourth indication may comprise obtaining the first coupling length $l_{c1}$ as a predefined value e.g., as stored and retrieved within the computer system 700 or retrieved from a suitable storage medium.

**Action 305**

The method comprises estimating the first articulation angle $\psi_1$ based on the first indication, the first longitudinal speed $v_{x1}$, the second wheelbase length $l_{wb2}$ and the first coupling length $l_{c1}$.

The estimation may be based on a trigonometric model of the first and second vehicle units 1, 2, with respect to their respective turning characteristics considering the first indication typically the first yaw rate $\omega_{z1}$, the first longitudinal speed $v_{x1}$, the second wheelbase length $l_{wb2}$ and the first coupling length $l_{c1}$. As an alternative, the estimation may be based on a predefined statistical model such as a trained machine learning model.

Preferably, estimating the first articulation angle $\psi_1$ is performed by using a procedure comprising determining a first turning motion characteristic of the first rear axle group $rag_1$ of the first vehicle and a second turning motion characteristic of the second rear axle group $rag_2$. The first and second turning motion characteristics may in relation to each other be used to estimate the first articulation angle $\psi_1$. This is since the turning motion of the first vehicle unit 1 relative the turning motion of the second vehicle unit 2 will naturally over time form an articulation that is the first articulation angle $\psi_1$, in particular when the turning motions are maintained over a transition time period.

The procedure may further comprise determining the first turning radius $Rg_1$ of the first rear axle group $rag_1$ and to combine the first turning radius $Rg_1$ and the first coupling length $l_{c1}$ to determine the first reference angle u representative of the first turning motion characteristic of the first rear axle group $rag_1$.

The procedure may further comprise determining the second turning radius $Rg_2$ of the second rear axle group $rag_2$ and to use the second turning radius $Rg_2$ and the second wheelbase length $l_{wb2}$ to determine the second reference angle w representative of the second turning motion characteristic of the second rear axle group $rag_2$.

Estimating the first articulation angle $\psi_1$ may be based on that the first turning radius $Rg_1$ of the first rear axle group $rag_1$, the second turning radius $Rg_2$ of the second rear axle group $rag_2$, and the third turning radius $Rc_1$ of the first coupling point $cp_1$ share a center point, i.e., that several part of the combination vehicle 100 turn around the same turning center point.

In some examples, the estimated first articulation angle $\psi 1$ is an estimation of a current articulation angle.

In some examples, the estimated first articulation angle $\psi 1$ is an estimation of a future articulation angle. In some of these examples, the first articulation angle $\psi_1$ is expected to occur at a steady state if the first yaw rate $\omega_{z1}$ and the first longitudinal s v peed$_{x1}$ remains constant.

In some examples, the steady-state is expected to occur within an expected transition time window, i.e., the estimated articulation angle may be expected to occur within the expected transition time window.

In some examples, the expected transition time window is a predefined time period or a time period calculated based on a predefined time model and by considering:

- the first yaw rate
- the first longitudinal speed $v_{x1}$
- the second wheelbase length $l_{wb2}$ and
- the first coupling length $l_{c1}$.

**Optional Actions 306-310**

The method may further comprise iterating actions 301-305 one or more times for further vehicle units of the combination vehicle 100, e.g., as referred to as actions 306-310. For example, when the plurality of vehicle units comprises a third vehicle unit, the third vehicle unit may extend in a third longitudinal direction along a third longitudinal axis. The second vehicle unit 2 may be located in front of said third vehicle unit 3 as seen along the second longitudinal axis. The third vehicle unit may be pivotally connected to the second vehicle unit 2 at a second coupling point such that the second longitudinal axis $ax_2$ and the third longitudinal axis form a second articulation angle. Actions 306-310 correspond to the actions 301-305 above, but is described for the second articulation angle instead of the first articulation angle. In this way, it is possible to estimate the articulation angle of multiple vehicle units of the combination vehicle 100.

**Action 306**

The method may comprise, e.g., as corresponding to action 301, obtaining a fifth indication, the fifth indication may be indicative of a second yaw rate $\omega_{z2}$ of the second vehicle unit 2 and/or indicative of the first articulation angle $\psi_1$.

**Action 307**

The method may comprise, e.g., as corresponding to action 302, obtaining a sixth indication of a second longitudinal speed along the second longitudinal axis $ax_2$ of the second vehicle unit 2.

**Action 308**

The method may comprise, e.g., as corresponding to action 303, obtaining a seventh indication of a third wheelbase length of the third unit 3, the third wheelbase length being a distance along the third longitudinal axis from the second coupling point to a center position of a third rear axle group of the third vehicle unit.

**Action 309**

The method may comprise, e.g., as corresponding to action 304, obtaining an eighth indication of a second coupling length along the second longitudinal axis $ax_2$ between the center position of the second rear axle group $rag_2$ and the second coupling point.

**Action 310**

The method may comprise, e.g., as corresponding to action 305, estimating the second articulation angle based on the fifth indication, the second longitudinal speed, the third wheelbase length and the second coupling length.

Actions 306-310 may further be iterated for any number of vehicle units and articulation angles, e.g., for a third articulation angle between the third vehicle unit and a fourth vehicle unit.

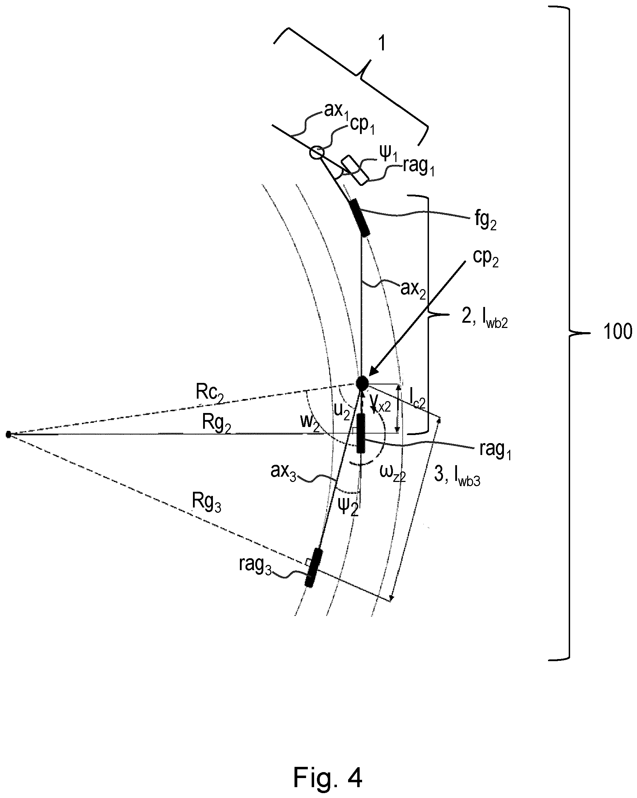

**FIG. 4** is an exemplary combination vehicle 100 according to an example, illustrating that the combination vehicle 100 may have further vehicle units than the first vehicle unit 1 and the second vehicle unit 2. In this example scenario, the combination vehicle 100 comprises the first vehicle unit 1, the second vehicle unit 2, and a **third vehicle unit 3,** e.g., as discussed in actions 305-310 above.

In this example, the third vehicle unit 3 may preferably be a trailer or dolly or otherwise towed vehicle unit.

In this example, the third vehicle unit 3 may extend in a third longitudinal direction along a **third longitudinal axis ax$_3$.**

In this example, the third longitudinal axis ax$_3$ may be parallel to a direction of travel of the third vehicle unit 3, e.g., if the third vehicle unit 3 would not be subject to a turning motion, i.e., a momentary forward direction.

In this example, the second vehicle unit 2 may be located in front of said third vehicle unit 3 as seen along the third longitudinal axis ax$_3$.

In this example, the third vehicle unit 3 may be pivotally connected to the second vehicle unit 2 at a **second coupling point cp$_2$** such that the third longitudinal axis ax$_3$ and the second longitudinal axis ax$_2$ form a **second articulation angle $\psi_2$.**

In this example, the third vehicle 3 unit and the second vehicle unit 2 may be turning such that they have respective turning motion characteristics.

In this example, the second vehicle unit 2 may be subject to a second yaw rate $\omega_{z2}$ and may be subject to a second longitudinal speed $v_{x2}$ along the second longitudinal axis ax$_2$ of the second vehicle unit 2.

In this example, the second yaw rate $\omega_{z2}$ may need to be estimated, e.g., using sensor data of wheel speed sensors or other suitable sensors.

In this example, the third vehicle unit 3 may be associated with a **third wheelbase length l$_{wb3}$**. The third wheelbase length l$_{wb3}$ may be a distance along the third longitudinal axis ax$_3$, e.g., from a center position of a **third rear axle group rag$_3$** of the third vehicle unit 3, and to the second coupling point cp$_2$.

In this example, the second vehicle unit 2 may be associated with a **second coupling length l$_{c2}$** along the second longitudinal axis ax$_2$, between a center position of the second rear axle group rag$_2$ and the second coupling point cp$_2$.

In this example, the turning motions for the second vehicle unit 2 and the third vehicle unit 3 herein may define how parts of the combination vehicle 100 is moving. As an example, turning radiuses may be used for different parts of examples herein. For example, a **fourth turning radius Rg$_2$** may define a turning radius of the second rear axle group rag$_2$. A **fifth turning radius Rg$_3$** may define a turning radius of the third rear axle group rag$_3$. A **sixth turning radius Rc$_2$** may define a turning radius of the second coupling point cp$_2$. The fourth, fifth, and sixth turning radiuses may share a center point, i.e., they are turning around the same position, e.g., the same center point as for the first, second, and third turning radiuses as discussed with respect to FIG. 1.

Examples herein, e.g., as discussed with respect to actions 306-310, may comprise obtaining information of the second yaw rate $\omega_{z2}$, the second longitudinal speed $v_{x2}$, the third wheelbase length l$_{wb3}$ and the second coupling length l$_{c2}$, e.g., as predefined and/or received as sensor data from sensors of the vehicle or derived based on said sensor data. Furthermore, examples herein may further estimate the second articulation angle $\psi_2$, based on the second yaw rate $\omega_{z2}$, the second longitudinal speed $v_{x2}$, the third wheelbase length l$_{wb3}$ and second coupling length l$_{c2}$. If the first yaw rate $\omega_{z1}$, is not available, then the first articulation angle $\psi_1$, may be used for the estimation instead. The estimation may preferably be based on a trigonometric relationship, typically comprising the intermediate step of deriving the fourth, fifth and/or sixth turning radiuses Rc$_2$, Rg$_2$, Rg$_3$, e.g., as discussed in actions 306-310. As an alternative, the estimation may be based on a trained machine learning model, e.g., a neural network, trained based on a number of training combination vehicles with measured corresponding values of vehicle units of respective training combination vehicles, such as respective yaw rates of the vehicle units, respective longitudinal speed of the vehicle units, respective wheelbase length of the vehicle units, respective the coupling lengths of the vehicle units, and respective articulation angle(s) of the vehicle units.

Examples herein may relate to determining a **third reference angle u$_2$** representative of third turning motion characteristic of the second rear axle group rag$_2$. Examples herein may further relate to determining a **fourth reference angle w$_2$** representative of a fourth turning motion characteristic of the third rear axle group rag$_3$. The third reference angle u$_2$ and the fourth reference angle w$_2$ may describe how the third and second vehicle units 2, 3, turn relative each other such that the second articulation angle $\psi_2$ may be estimated.

Example calculations

Examples herein, such as actions 301-305, and actions 306-310 in a corresponding manner, may relate to the following calculations as will be discussed below.

The first articulation angle $\psi_1$ may be derived or estimated from trigonometric relationships of the combination 100, e.g., as part of action 305 and with reference to the illustration of FIG. 1. The estimation may be performed using the first yaw rate $\omega_{z1}$ and the first longitudinal speed $v_{x1}$ of the first vehicle unit 1as input according to the following Equations 1-5.

**Equation 1:** $$Rg_1 = \frac{v_{x1}}{\omega_{z1}}$$

In other words, Equation 1 may relate to determining the first turning radius $Rg_1$ of the first rear axle group $rag_1$ based on the first yaw rate $\omega_{z1}$ and the first longitudinal speed $v_{x1}$, e.g., as part of the procedure of action 305.

**Equation 2:** $$Rc_1 = \sqrt{Rg_1^2 + l_{c1}^2}$$

In other words, Equation 2 may relate to determining the third turning radius $Rc_1$ of the first coupling point $cp_1$ based on the square root of the squared second turning radius $Rg_1$ and the squared first coupling length $l_{c1}$, e.g., as part of the procedure of action 305.

**Equation 3:** $$Rg_2 = \sqrt{Rc_1^2 - l_{wb2}^2}$$

In other words, Equation 3 may relate to determining the second turning radius $Rg_2$ of the second rear axle group $rag_2$ based on the square root of the squared third turning radius $Rc_1$ and the squared second wheelbase length $l_{wb2}$, e.g., as part of the procedure of action 305.

**Equation 4:** $$u = \tan^{-1}\left(\frac{Rg_2}{l_{wb2}}\right)$$

In other words, Equation 4 may relate to determining first reference angle u based on the inverse tangent function of second turning radius $Rg_2$ divided by the second wheelbase length $l_{wb2}$, e.g., as part of the procedure of action 305.

**Equation 5:** $$w = \tan^{-1}\left(\frac{Rg_1}{l_{c1}}\right)$$

In other words, Equation 5 may relate to determining second reference angle w based on the inverse tangent function of first turning radius $Rg_1$ divided by the first coupling length $l_{c1}$, e.g., as part of the procedure of action 305.

The determination relating to Equations 1-5 is based on a trigonometric relationship based on that the first turning radius $Rg_1$, the second turning radius $Rg_2$, and the third turning radius $Rc_1$ share a center point of which they turn around with the respective radiuses. Using this trigonometric relationship, the first reference angle u and the second reference angle w can be determined based on the inverse tangent function as discussed in Equations 4-5.

The first reference angle u and the second reference angle w may further be used to estimate the first articulation angle $\psi_1$, e.g., as part of action 305, based on the below Equation 6.

**Equation 6:** $$\psi_1 = sign(\omega_z)(w - u)$$

In other words, Equation 6 may relate to estimating the first articulation angle $\psi_1$, e.g., as part of action 305, by taking the difference of the first reference angle u and the second reference angle w, and accounting for which direction the first way rate $\omega_z$ is applying yaw to the first vehicle unit 1, by using the sign function. The estimation works as if the combination vehicle 100 maintains a same turning motion, the first reference angle u and the second reference angle w will always, as seen clearly by the trigonometric relationship of FIG.1., define the angular relationship of the first longitudinal axis $ax_1$ with respect to the second longitudinal axis $ax_2$, i.e., the first articulation angle $\psi_1$.

Since all inputs, e.g., as obtained in actions 301-304 and/or as part of the above-mentioned Equations 1-6, is derived or obtained from physical relations that a driver or automatic drive system of the combination vehicle 100 is only controlling indirectly from a steering wheel of the combination vehicle 100 means that, when the driver or drive system changes a steering direction, the first articulation angle will not change directly but first after the first yaw-rate $\omega_z$ of the first vehicle unit 1 has changed. Thus, the estimation of the first articulation angle $\psi_1$ may always be estimated with a high accuracy.

Examples herein will not be immediately affected by changes in steering wheel angle. In other words, in examples herein, there is no direct coupling or relationship between the steering wheel and the estimation of the one or more articulation angles such as the first articulation angle $\psi_1$. This means that one or more articulation angles such as the first articulation angle $\psi_1$ can always be accurately estimated independently of the steering wheel angle.

The use of the model according to the above actions and/or equations may provide a steady state first articulation

angle $\psi_1$ for the current first way rate $\omega_z$ immediately. The first articulation angle $\psi_1$ may however be associated with a transition time period before reached. Since a steady state articulation angle is found may mean that the estimation according to action 305 relates to a prediction of the first articulation angle $\psi_1$.

In other words, the first articulation angle $\psi_1$, may be a future articulation angle or a predicted articulation angle within the transition time. However, since the transition time period is short, the first articulation angle $\psi_1$ may also accurately, within an error margin, also be relevant for a current articulation angle.

In examples herein, no wheel slip may be accounted for. The estimation of action 305 may further account for wheel slip of the combination vehicle 100, which wheel slip may be different for the different plurality of vehicle units and may be estimated or measured in any suitable manner.

As further advantages to examples herein, the estimation according to action 305 and/or the equations above may only need to provide the second wheelbase length $l_{wb2}$ as parameters of the second vehicle unit 2. Since the second vehicle unit 2 is a towed vehicle unit, this may be advantageous as towed vehicle units may typically not be arranged with active sensors for measuring various characteristics or motions.

For the lead towing vehicle unit of the combination vehicle 100, e.g., the first vehicle unit 1 or the towing vehicle unit 0, the measurement of the yaw rate is available, e.g., by reception and/or processing sensor data from sensors in the respective lead towing vehicle unit.

Using the above-mentioned actions, examples and/or equations, further articulation angles may be estimated for other vehicle units in a corresponding manner, e.g., as the second articulation angle $\psi_2$, e.g., as part of action 310, at least if the vehicle units yaw rate can be measured or estimated, e.g., as in actions 306-310.

If yaw rate cannot be measured, the yaw rate for the towed vehicle units, e.g., the first, second, and/or third vehicle unit 1, 2, 3, may be estimated as follows according to Steps 1-4:

**Step** 1. Obtaining wheel speeds of one or more left wheels $v_{xwtl}$, of the respective vehicle unit,
**Step 2.** Obtaining wheel speeds of one or more right wheels $v_{xwtl}$, of the respective vehicle unit,
**Step 3.** Obtaining track width $l_{TWD}$ of the respective vehicle unit

$$\omega_{zt} = \frac{v_{xwtl} - v_{xwtR}}{l_{TWD}}$$

**Step 4.** Estimating the yaw rate of the respective vehicle unit as:

Additionally or alternatively, if the yaw rate cannot be measured, the yaw rate for the towed vehicle units, e.g., the first, second, and/or third vehicle unit 1, 2, 3, may be estimated as follows according to Steps 5-7:

**Step 5.** Obtaining lateral acceleration $a_{yt}$ of the respective vehicle unit.
**Step 6.** Obtaining a $v_{xt}$ longitudinal speed of the respective vehicle unit.

$$\omega_{zt} = \frac{a_{yt}}{v_{xt}}$$

**Step 7.** Estimating the yaw rate of the respective vehicle unit as:

All above examples, methods, actions, procedures, steps, and/or equations may be combined with any of the other presented examples herein.

The above estimation method can be combined with any number of suitable statistical models such as trained machine learning model trained to estimate the one or more articulation angles such as the first articulation angle $\psi_1$, e.g., based on any suitable available sensor data.

A method based on the trained machine learning model may comprise collecting data on a relative motion and orientation of the first vehicle unit 1 and the second vehicle unit 2, and train the machine learning model accordingly with respect to a measured articulation angle.

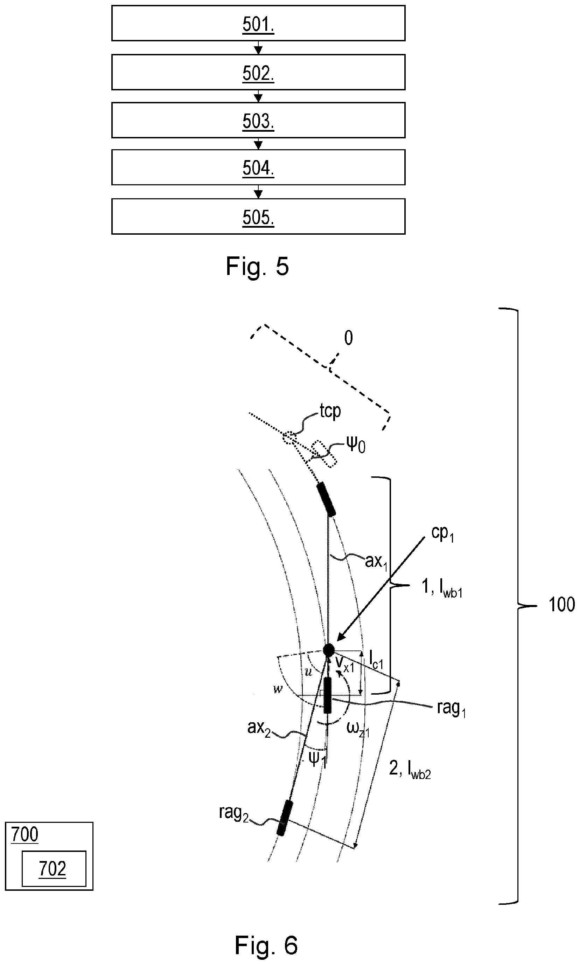

**FIG. 5** is a flow chart of a computer-implemented method for estimating one or more articulation angles for the combination vehicle 100 comprising a plurality of vehicle units. The plurality of vehicle units comprises the first vehicle unit 1 and the second vehicle unit 2. The first vehicle unit 1 extends in the first longitudinal direction along the first longitudinal axis $ax_1$. The second vehicle unit 2 extends in the second longitudinal direction along the second longitudinal axis $ax_2$. The first vehicle unit 1 is located in front of said second vehicle unit 2 as seen along the first longitudinal axis $ax_1$. The second vehicle unit 2 is pivotally connected to the first vehicle unit 1 at a first coupling point $cp_1$ such that the first longitudinal axis $ax_1$ and the second longitudinal axis $ax_2$ form the first articulation angle $\psi_1$.

The method comprises actions 501-505 which may be combined with any of the examples above, e.g., actions 301-310, in any suitable manner.

### Action 501

The method comprises, by the processing circuitry 702 of the computer system 700, obtaining the first indication. The first indication being indicative of the first yaw rate $\omega_{z1}$ of the first vehicle unit 1 and/or indicative of the towing articulation angle between the first vehicle unit 1 and the towing coupling point tcp of the towing vehicle unit 0 arranged to tow the first vehicle unit 1, wherein the towing vehicle unit 0 is located in front of the first vehicle unit 1 as seen along the first longitudinal axis $ax_1$.

### Action 502

The method comprises, by the processing circuitry 702 obtaining the second indication of the first longitudinal speed $v_{x1}$ along the first longitudinal axis $ax_1$ of the first vehicle unit 1.

### Action 503

The method comprises, by the processing circuitry 702 obtaining the third indication of the second wheelbase length $l_{wb2}$ of the second vehicle unit 2 of the plurality of vehicle units. The second wheelbase length $l_{wb2}$ is a distance along the second longitudinal axis $ax_2$ from the first coupling point $cp_1$ to a center of the second rear axle group $rag_2$ of the second vehicle unit 2.

### Action 504

The method comprises, by the processing circuitry 702 obtaining the fourth indication of the first coupling length $l_{c1}$ along the first longitudinal axis $ax_1$ between a center position of the first rear axle group $rag_1$ of the first vehicle unit 1 and the first coupling point $cp_1$.

### Action 505

The method comprises, by the processing circuitry 702 estimating the first articulation angle $\psi_1$ based on the first indication, the first longitudinal speed $v_{x1}$, the second wheelbase length $l_{wb2}$ and the first coupling length $l_{c1}$.

**FIG. 6** is another view of **FIG. 1,** according to an example.

The computer system 700 comprising the processing circuitry 702 configured to estimate one or more articulation angles for the combination vehicle 100 comprising a plurality of vehicle units is provided. The plurality of vehicle units comprises the first vehicle unit 1 and the second vehicle unit 2. The first vehicle unit 1 extends in a first longitudinal direction along the first longitudinal axis $ax_1$. The second vehicle unit 2 extends in a second longitudinal direction along the second longitudinal axis $ax_2$. The first vehicle unit 1 is located in front of said second vehicle unit 2 as seen along the first longitudinal axis $ax_1$. The second vehicle unit 2 is pivotally connected to the first vehicle unit 1 at the first coupling point $cp_1$ such that the first longitudinal axis $ax_1$ and the second longitudinal axis $ax_2$ form the first articulation angle $\psi_1$. The processing circuitry 702 is configured to obtain the first indication. The first indication is indicative of the first yaw rate $\omega_{z1}$ of the first vehicle unit 1 and/or indicative of the towing articulation angle $\psi_0$ between the first vehicle unit 1 and the towing coupling point tcp of the towing vehicle unit 0 arranged to tow the first vehicle unit 1, wherein the towing vehicle unit 0 is located in front of the first vehicle unit 1 as seen along the first longitudinal axis $ax_1$. The processing circuitry 702 is configured to obtain the second indication of the first longitudinal speed $v_{x1}$ along the first longitudinal axis ax1 of the first vehicle unit 1. The processing circuitry 702 is configured to obtain the third indication of the second wheelbase length $l_{wb2}$ of the second vehicle unit 2. The second wheelbase length $l_{wb2}$ is a distance along the second longitudinal axis $ax_2$ from the first coupling point $cp_1$ to a center position of the second rear axle group $rag_2$ of the second vehicle unit 2. The processing circuitry 702 is configured to obtain the fourth indication of the first coupling length $l_{c1}$ along the first longitudinal axis $ax_1$, between a center position of the first rear axle group $rag_1$ of the first vehicle unit 1 and the first coupling point $cp_1$. The processing circuitry 702 is configured to estimate the first articulation angle $\psi_1$ based on the first indication, the first longitudinal speed $v_{x1}$, the second wheelbase length $l_{wb2}$ and the first coupling length $l_{c1}$.

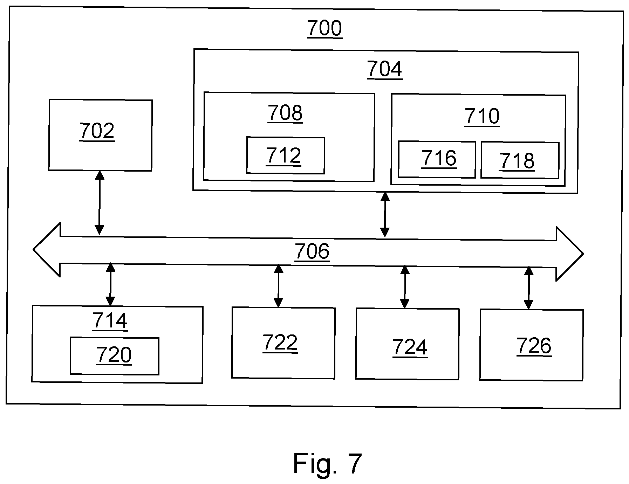

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706**. The computer system **700** may include at least one computing device having the processing circuitry **702**. The system bus **706** provides an interface for system components including, but not limited to, the memory **704** and the processing circuitry **702**. The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718**. All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702**. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702**. The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follow a number of Examples 1-20 of the disclosure. The Examples may be combined with any of the above examples or with the attached claims in any suitable manner.

Example 1. A computer system 700 comprising processing circuitry 702 configured to estimate one or more articulation angles for a combination vehicle 100 comprising a plurality of vehicle units, the plurality of vehicle units comprising a first vehicle unit 1 and a second vehicle unit 2, the first vehicle unit 1 extending in a first longitudinal direction along a first longitudinal axis $ax_1$, the second vehicle unit 2 extending in a second longitudinal direction along a second longitudinal axis $ax_2$, wherein the first vehicle unit 1 is located in front of said second vehicle unit 2 as seen along the first longitudinal axis $ax_1$, the second vehicle unit 2 being pivotally connected to the first vehicle unit 1 at a first coupling point $cp_1$ such that the first longitudinal axis $ax_1$ and the second longitudinal axis $ax_2$ form a first articulation angle $\psi_1$, the processing circuitry 702 is configured to:

- obtain a first indication, the first indication being indicative of a first yaw rate $\omega_{z1}$ of the first vehicle unit 1 and/or indicative of a towing articulation angle $\psi_0$ between the first vehicle unit 1 and a towing coupling point tcp of a towing vehicle unit 0 arranged to tow the first vehicle unit 1, wherein the towing vehicle unit 0 is located in front of the first vehicle unit 1 as seen along the first longitudinal axis $ax_1$,
- obtain a second indication of a first longitudinal speed $v_{x1}$ along the first longitudinal axis ax1 of the first vehicle unit 1,
- obtain a third indication of a second wheelbase length $l_{wb2}$ of the second vehicle unit 2, the second wheelbase length $l_{wb2}$ being a distance along the second longitudinal axis $ax_2$ from the first coupling point $cp_1$ to a center position of a second rear axle group $rag_2$ of the second vehicle unit 2,
- obtain a fourth indication of a first coupling length $l_{c1}$ along the first longitudinal axis $ax_1$ between a center position of a first rear axle group $rag_1$ of the first vehicle unit 1 and the first coupling point $cp_1$, and
- estimate the first articulation angle $\psi_1$ based on the first indication, the first longitudinal speed $v_{x1}$, the second wheelbase length $l_{wb2}$ and the first coupling length $l_{c1}$.

Example 2. The computer system 700 of Example 1, wherein the processing circuitry 702 is configured to estimate the first articulation angle $\psi_1$ using a procedure comprising determining a first turning motion characteristic of the first rear axle group $rag_1$ of the first vehicle and a second turning motion characteristic of the second rear axle group $rag_2$.

Example 3. The computer system 700 of Example 2, wherein the procedure comprises determining a second turning radius $Rg_2$ of the second rear axle group and to use the second turning radius $Rg_2$ and the second wheelbase length $l_{wb2}$ to determine a second reference angle w representative of a second turning motion characteristic of the second rear axle group.

Example 4. The computer system 700 of any of Examples 2-3, wherein the procedure comprises determining a first turning radius $Rg_1$ of the first rear axle group $rag_1$ and to combine the first turning radius $Rg_1$ and the first coupling length $l_{c1}$ to determine a first reference angle u representative of the first turning motion characteristic of the first rear axle group $rag_1$.

Example 5. The computer system 700 of any of Examples 1-4, wherein the processing circuitry 702 is configured to estimate the first articulation angle $\psi_1$ based on that a first turning radius $Rg_1$ of the first rear axle group $rag_1$, a second turning radius $Rg_2$ of the second rear axle group $rag_2$, and a third turning radius $Rc_1$ of the first coupling point $cp_1$ share a center point.

Example 6. The computer system 700 of any of Examples 1-5, wherein the estimated first articulation angle $\psi_1$ is an estimation of a current articulation angle.

Example 7. The computer system 700 of any of Examples 1-6, wherein the estimated first articulation angle $\psi_1$ is an estimation of a future articulation angle wherein the first articulation angle $\psi_1$ is expected to occur at a steady state if the first yaw rate and the first longitudinal speed $v_{x1}$ remains constant.

Example 8. The computer system 700 of Example 7, wherein the steady-state is expected to occur within an expected transition time window.

Example 9. The computer system 700 of Example 8, wherein the expected transition time window is a predefined time period or a time period calculated based on a predefined time model and by considering:

- the first yaw rate $\omega_{z1}$,
- the first longitudinal speed $v_{x1}$,
- the second wheelbase length $l_{wb2}$, and
- the first coupling length $l_{c1}$.

Example 10. The computer system 700 of any of Examples 1-9, wherein, when the first vehicle unit 1 is a towed vehicle unit the processing circuitry 702 is further configured to obtain the first indication by obtaining the towing articulation angle or by estimating the first yaw rate $\omega_{z1}$.

Example 11. The computer system 700 of Example 10, wherein estimating the first yaw rate $\omega_{z1}$ comprises:

- obtaining an indication of wheel speeds of wheels of the first vehicle unit 1,
- obtaining an indication of a first track width twi of the first vehicle unit 1, and
- estimating the first yaw rate $\omega_{z1}$ based on the wheel speeds and the first track width twi of the first vehicle unit 1; and/or

wherein estimating the first yaw rate $\omega_{z1}$ comprises:

- obtaining an indication of a lateral acceleration of the first vehicle unit 1, and
- obtaining an indication of longitudinal speed of the first vehicle unit 1, and
- estimating the first yaw rate based on the lateral acceleration and the longitudinal speed of the first vehicle unit 1.

Example 12. The computer system 700 of any of Examples 1-11, wherein, when the first vehicle unit 1 is a towing vehicle unit 0 such as a tractor, the processing circuitry 702 is further configured to obtain the first indication by measuring the first yaw rate $\omega_{z1}$ using one or more sensors of the first vehicle unit 1.

Example 13. The computer system 700 of any of Examples 1-12, wherein the plurality of vehicle units comprises a third vehicle unit 3, the third vehicle unit 3 extending in a third longitudinal direction along a third longitudinal axis $ax_3$, wherein the second vehicle unit 2 is located in front of said third vehicle unit 3 as seen along the second longitudinal axis $ax_2$, the third vehicle unit 3 being pivotally connected to the second vehicle unit 2 at a second coupling point $cp_2$ such that the second longitudinal axis $ax_2$ and the third longitudinal axis $ax_3$ form a second articulation angle, and wherein the processing circuitry 702 is further configured to:

- obtain a fifth indication, the fifth indication being indicative of a second yaw rate $\omega_{z2}$ of the second vehicle unit 2 and/or indicative of the first articulation angle,
- obtain a sixth indication of a second longitudinal speed $v_{x2}$ along the second longitudinal axis $ax_2$ of the second vehicle unit 2,
- obtain a seventh indication of a third wheelbase length $l_{wb3}$ of the third unit 3, the third wheelbase length $l_{wb3}$ being a distance along the third longitudinal axis $ax_3$ from the second coupling point $cp_2$ to a center position of a third rear axle group $rag_3$ of the third vehicle unit 3,
- obtain an eight indication of a second coupling length $l_{c2}$ along the second longitudinal axis $ax_2$ between the center position of the second rear axle group $rag_2$ and the second coupling point $cp_2$, and
- estimate the second articulation angle $\psi_2$ based on the fifth indication, the second longitudinal speed $v_{x2}$, the third wheelbase length $l_{wb3}$ and the second coupling length $l_{c2}$.

Example 14. A combination vehicle 100 comprising a plurality of vehicle units, the plurality of vehicle units comprising a first vehicle unit 1 and a second vehicle unit 2, the first vehicle unit 1 extending in a first longitudinal direction along a first longitudinal axis $ax_1$, the second vehicle unit 2 extending in a second longitudinal direction along a second longitudinal axis $ax_2$, wherein the first vehicle unit 1 is located in front of said second vehicle unit 2 as seen along the first longitudinal axis $ax_1$, the second vehicle unit 2 being pivotally connected to the first vehicle unit 1 at a first coupling

point $cp_1$ such that the first longitudinal axis ax1 and the second longitudinal axis $ax_2$ form a first articulation angle, the combination vehicle 100 comprising the computer system 700 according to any of Examples 1-13 and/or the combination vehicle 100 being configured to be controlled based on one or more articulation angles as estimated by the computer system 700 according to any of Examples 1-13.

Example 15. A computer-implemented method for estimating one or more articulation angles for a combination vehicle 100 comprising a plurality of vehicle units, the plurality of vehicle units comprising a first vehicle unit 1 and a second vehicle unit 2, the first vehicle unit 1 extending in a first longitudinal direction along a first longitudinal axis ax1, the second vehicle unit 2 extending in a second longitudinal direction along a second longitudinal axis $ax_2$, wherein the first vehicle unit 1 is located in front of said second vehicle unit 2 as seen along the first longitudinal axis ax1, the second vehicle unit 2 being pivotally connected to the first vehicle unit 1 at a first coupling point cp1 such that the first longitudinal axis ax1 and the second longitudinal axis $ax_2$ form a first articulation angle, the method comprising:

- by processing circuitry 702 of a computer system 700, obtaining 301, 501 a first indication, the first indication being indicative of a first yaw rate $\omega_{z1}$ of the first vehicle unit 1 and/or indicative of a towing articulation angle between the first vehicle unit 1 and a towing coupling point tcp of a towing vehicle unit 0 arranged to tow the first vehicle unit 1, wherein the towing vehicle unit 0 is located in front of the first vehicle unit 1 as seen along the first longitudinal axis ax1,
- by the processing circuitry 702 obtaining 302, 502 a second indication of a first longitudinal speed $v_{x1}$ along the first longitudinal axis $ax_1$ of the first vehicle unit 1,
- by the processing circuitry 702 obtaining 303, 503 a third indication of a second wheelbase length $l_{wb2}$ of the second vehicle unit 2 of the plurality of vehicle units, the second wheelbase length $l_{wb2}$ being a distance along the second longitudinal axis $ax_2$ from the first coupling point $cp_1$ to a center of a second rear axle group $rag_2$ of the second vehicle unit 2,
- by the processing circuitry 702 obtaining 304, 504 a fourth indication of a first coupling length $l_{c1}$ along the first longitudinal axis $ax_1$ between a center position of a first rear axle group $rag_1$ of the first vehicle unit 1 and the first coupling point $cp_1$, and
- by the processing circuitry 702 estimating 305, 505 the first articulation angle $\psi_1$ based on the first indication, the first longitudinal speed $v_{x1}$, the second wheelbase length $l_{wb2}$ and the first coupling length $l_{c1}$.

Example 16. The method of Example 15, wherein estimating the first articulation angle $\psi_1$ is performed by using a procedure comprising determining a first turning motion characteristic of the first rear axle group $rag_1$ of the first vehicle and a second turning motion characteristic of the second rear axle group $rag_2$.

Example 17. The method of Example 16, wherein the procedure comprises determining a second turning radius $Rg_2$ of the second rear axle group and to use the second turning radius $Rg_2$ and the second wheelbase length $l_{wb2}$ to determine a second reference angle w representative of a second turning motion characteristic of the second rear axle group.

Example 18. The method of any of Examples 16-17, wherein the procedure comprises determining a first turning radius $Rg_1$ of the first rear axle group $rag_1$ and to combine the first turning radius $Rg_1$ and the first coupling length $l_{c1}$ to determine a first reference angle u representative of the first turning motion characteristic of the first rear axle group $rag_1$.

Example 19. A computer program product comprising program code for performing, when executed by the processing circuitry 702, the method of any of Examples 15-18.

Example 20. A non-transitory computer-readable storage medium comprising instructions, which when executed by the processing circuitry 702, cause the processing circuitry 702 to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to estimate one or more articulation angles for a combination vehicle (100) comprising a plurality of vehicle units, the plurality of vehicle units comprising a first vehicle unit (1) and a second vehicle unit (2), the first vehicle unit (1) extending in a first longitudinal direction along a first longitudinal axis ($ax_1$), the second vehicle unit (2) extending in a second longitudinal direction along a second longitudinal axis ($ax_2$), wherein the first vehicle unit (1) is located in front of said second vehicle unit (2) as seen along the first longitudinal axis ($ax_1$), the second vehicle unit (2) being pivotally connected to the first vehicle unit (1) at a first coupling point ($cp_1$) such that the first longitudinal axis ($ax_1$) and the second longitudinal axis ($ax_2$) form a first articulation angle ($\psi_1$), the processing circuitry (702) is configured to:

   - obtain a first indication, the first indication being indicative of a first yaw rate ($\omega_{z1}$) of the first vehicle unit (1) and/or indicative of a towing articulation angle ($\psi_0$) between the first vehicle unit (1) and a towing coupling point (tcp) of a towing vehicle unit (0) arranged to tow the first vehicle unit (1), wherein the towing vehicle unit (0) is located in front of the first vehicle unit (1) as seen along the first longitudinal axis ($ax_1$),
   - obtain a second indication of a first longitudinal speed ($v_{x1}$) along the first longitudinal axis ($ax_1$) of the first vehicle unit (1),
   - obtain a third indication of a second wheelbase length ($l_{wb2}$) of the second vehicle unit (2), the second wheelbase length ($l_{wb2}$) being a distance along the second longitudinal axis ($ax_2$) from the first coupling point ($cp_1$) to a center position of a second rear axle group ($rag_2$) of the second vehicle unit (2),
   - obtain a fourth indication of a first coupling length ($l_{c1}$) along the first longitudinal axis (ax1) between a center position of a first rear axle group ($rag_1$) of the first vehicle unit (1) and the first coupling point ($cp_1$), and
   - estimate the first articulation angle ($\psi_1$) based on the first indication, the first longitudinal speed ($v_{x1}$), the second wheelbase length ($l_{wb2}$) and the first coupling length ($l_{c1}$).

2. The computer system (700) of claim 1, wherein the processing circuitry (702) is configured to estimate the first articulation angle ($\psi_1$) using a procedure comprising determining a first turning motion characteristic of the first rear axle group ($rag_1$) of the first vehicle and a second turning motion characteristic of the second rear axle group ($rag_2$).

3. The computer system (700) of claim 2, wherein the procedure comprises determining a second turning radius ($Rg_2$) of the second rear axle group and to use the second turning radius ($Rg_2$) and the second wheelbase length ($l_{wb2}$) to determine a second reference angle (w) representative of a second turning motion characteristic of the second rear axle group.

4. The computer system (700) of any of claims 2-3, wherein the procedure comprises determining a first turning radius ($Rg_1$) of the first rear axle group ($rag_1$) and to combine the first turning radius ($Rg_1$) and the first coupling length ($l_{c1}$) to determine a first reference angle (u) representative of the first turning motion characteristic of the first rear axle group ($rag_1$).

5. The computer system (700) of any of claims 1-4, wherein the processing circuitry (702) is configured to estimate the first articulation angle ($\psi_1$) based on that a first turning radius ($Rg_1$) of the first rear axle group ($rag_1$), a second turning radius ($Rg_2$) of the second rear axle group ($rag_2$), and a third turning radius ($Rc_1$) of the first coupling point ($cp_1$) share a center point.

6. The computer system (700) of any of claims 1-5, wherein the estimated first articulation angle ($\psi_1$) is an estimation of a current articulation angle.

7. The computer system (700) of any of claim 1-6, wherein the estimated first articulation angle ($\psi_1$) is an estimation of a future articulation angle wherein the first articulation angle ($\psi_1$) is expected to occur at a steady state if the first yaw rate and the first longitudinal speed remains constant, and optionally, wherein the steady-state is expected to occur within an expected transition time window, preferably wherein the expected transition time window is a predefined time period or a time period calculated based on a predefined time model and by considering:

   - the first yaw rate ($\omega_{z1}$),
   - the first longitudinal speed ($v_{x1}$),
   - the second wheelbase length ($l_{wb2}$) and
   - the first coupling length ($l_{c1}$).

8. The computer system (700) of any of claims 1-7, wherein, when the first vehicle unit (1) is a towed vehicle unit the processing circuitry (702) is further configured to obtain the first indication by obtaining the towing articulation angle or by estimating the first yaw rate ($\omega_{z1}$).

9. The computer system (700) of claim 8, wherein estimating the first yaw rate ($\omega_{z1}$) comprises:

   - obtaining an indication of wheel speeds of wheels of the first vehicle unit (1),
   - obtaining an indication of a first track width (twi) of the first vehicle unit (1), and
   - estimating the first yaw rate ($\omega_{z1}$) based on the wheel speeds and the first track width (twi) of the first vehicle unit (1); and/or

   wherein estimating the first yaw rate ($\omega_{z1}$) comprises:

   - obtaining an indication of a lateral acceleration of the first vehicle unit (1), and
   - obtaining an indication of longitudinal speed of the first vehicle unit (1), and
   - estimating the first yaw rate based on the lateral acceleration and the longitudinal speed of the first vehicle unit (1).

10. The computer system (700) of any of claims 1-9, wherein, when the first vehicle unit (1) is a towing vehicle unit (0) such as a tractor, the processing circuitry (702) is further configured to obtain the first indication by measuring the first yaw rate ($\omega_{z1}$) using one or more sensors of the first vehicle unit (1).

11. The computer system (700) of any of claims 1-10, wherein the plurality of vehicle units comprises a third vehicle unit (3), the third vehicle unit (3) extending in a third longitudinal direction along a third longitudinal axis ($ax_3$), wherein the second vehicle unit (2) is located in front of said third vehicle unit (3) as seen along the second longitudinal axis ($ax_2$), the third vehicle unit (3) being pivotally connected to the second vehicle unit (2) at a second coupling point ($cp_2$) such that the second longitudinal axis ($ax_2$) and the third longitudinal axis ($ax_3$) form a second articulation angle, and wherein the processing circuitry (702) is further configured to:

   - obtain a fifth indication, the fifth indication being indicative of a second yaw rate ($\omega_{z2}$) of the second vehicle unit (2) and/or indicative of the first articulation angle,
   - obtain a sixth indication of a second longitudinal speed ($v_{x2}$) along the second longitudinal axis ($ax_2$) of the second vehicle unit (2),
   - obtain a seventh indication of a third wheelbase length ($l_{wb3}$) of the third unit (3), the third wheelbase length ($l_{wb3}$) being a distance along the third longitudinal axis ($ax_3$) from the second coupling point ($cp_2$) to a center position of a third rear axle group ($rag_3$) of the third vehicle unit (3),

- obtain an eight indication of a second coupling length ($l_{c2}$) along the second longitudinal axis ($ax_2$) between the center position of the second rear axle group ($rag_2$) and the second coupling point ($cp_2$), and
- estimate the second articulation angle ($\psi_2$) based on the fifth indication, the second longitudinal speed ($v_{x2}$), the third wheelbase length ($l_{wb3}$) and the second coupling length ($l_{c2}$).

12. A combination vehicle (100) comprising a plurality of vehicle units, the plurality of vehicle units comprising a first vehicle unit (1) and a second vehicle unit (2), the first vehicle unit (1) extending in a first longitudinal direction along a first longitudinal axis ($ax_1$), the second vehicle unit (2) extending in a second longitudinal direction along a second longitudinal axis ($ax_2$), wherein the first vehicle unit (1) is located in front of said second vehicle unit (2) as seen along the first longitudinal axis ($ax_1$), the second vehicle unit (2) being pivotally connected to the first vehicle unit (1) at a first coupling point ($cp_1$) such that the first longitudinal axis ($ax_1$) and the second longitudinal axis ($ax_2$) form a first articulation angle, the combination vehicle (100) comprising the computer system (700) according to any of claims 1-11 and/or the combination vehicle (100) being configured to be controlled based on one or more articulation angles as estimated by the computer system (700) according to any of claims 1-11.

13. A computer-implemented method for estimating one or more articulation angles for a combination vehicle (100) comprising a plurality of vehicle units, the plurality of vehicle units comprising a first vehicle unit (1) and a second vehicle unit (2), the first vehicle unit (1) extending in a first longitudinal direction along a first longitudinal axis ($ax_1$), the second vehicle unit (2) extending in a second longitudinal direction along a second longitudinal axis ($ax_2$), wherein the first vehicle unit (1) is located in front of said second vehicle unit (2) as seen along the first longitudinal axis (ax1), the second vehicle unit (2) being pivotally connected to the first vehicle unit (1) at a first coupling point ($cp_1$) such that the first longitudinal axis (ax1) and the second longitudinal axis ($ax_2$) form a first articulation angle, the method comprising:

- by processing circuitry (702) of a computer system (700), obtaining (301, 501) a first indication, the first indication being indicative of a first yaw rate ($\omega_{z1}$) of the first vehicle unit (1) and/or indicative of a towing articulation angle between the first vehicle unit (1) and a towing coupling point (tcp) of a towing vehicle unit (0) arranged to tow the first vehicle unit (1), wherein the towing vehicle unit (0) is located in front of the first vehicle unit (1) as seen along the first longitudinal axis ($ax_1$),
- by the processing circuitry (702) obtaining (302, 502) a second indication of a first longitudinal speed ($v_{x1}$) along the first longitudinal axis ($ax_1$) of the first vehicle unit (1),
- by the processing circuitry (702) obtaining (303, 503) a third indication of a second wheelbase length ($l_{wb2}$) of the second vehicle unit (2) of the plurality of vehicle units, the second wheelbase length ($l_{wb2}$) being a distance along the second longitudinal axis ($ax_2$) from the first coupling point ($cp_1$) to a center position of a second rear axle group ($rag_2$) of the second vehicle unit (2),
- by the processing circuitry (702) obtaining (304, 504) a fourth indication of a first coupling length ($l_{c1}$) along the first longitudinal axis ($ax_1$) between a center position of a first rear axle group ($rag_1$) of the first vehicle unit (1) and the first coupling point ($cp_1$), and
- by the processing circuitry (702) estimating (305, 505) the first articulation angle ($\psi_1$) based on the first indication, the first longitudinal speed ($v_{x1}$), the second wheelbase length ($l_{wb2}$) and the first coupling length ($l_{c1}$).

14. A computer program product comprising program code for performing, when executed by the processing circuitry (702), the method of claim 13.

15. A non-transitory computer-readable storage medium comprising instructions, which when executed by the processing circuitry (702), cause the processing circuitry (702) to perform the method of claim 13.

Fig. 1

Fig. 2

Fig. 3

Fig. 4

| 501. |
|------|
| 502. |
| 503. |
| 504. |
| 505. |

Fig. 5

Fig. 6

Fig. 7

Europäisches
Patentamt

European
Patent Office

Office européen
des brevets

# EUROPEAN SEARCH REPORT

**Application Number**

EP 24 16 4230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/250680 A1 (GOODARZI AVESTA [CA] ET AL) 11 August 2022 (2022-08-11) * paragraphs [0050] - [0055]; claims 1,6; figures 1-3 * | 1-15 | INV. B62D13/00 B62D13/06 |
| A | US 2017/240204 A1 (RAAD JOSEPH M [US] ET AL) 24 August 2017 (2017-08-24) * paragraphs [0042], [0061] - [0064]; figures 1-4 * | 1-15 | |

**TECHNICAL FIELDS SEARCHED (IPC)**

B62D

The present search report has been drawn up for all claims

| Place of search | Date of completion of the search | Examiner |
|---|---|---|
| The Hague | 2 September 2024 | Janusch, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4230

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2024

| Patent document cited in search report | Publication date | Patent family member(s) | Publication date |
|---|---|---|---|
| US 2022250680 A1 | 11-08-2022 | CN 114852170 A<br>DE 102021130552 A1<br>US 2022250680 A1 | 05-08-2022<br>11-08-2022<br>11-08-2022 |
| US 2017240204 A1 | 24-08-2017 | NONE | |

EPO FORM P0459

For more details about this annex : see Official Journal of the European Patent Office, No. 12/82